# EUROPEAN PATENT APPLICATION

(11) **EP 4 473 836 A1**
(43) Date of publication of application: **11.12.2024**
(21) Application number: 23000079.6
(22) Date of filing: 06.06.2023
(51) Int. Cl.: A01N 59/00, A01N 25/00, A01N 25/30, A01P 1/00

(54) **ANTI-MICROBIAL SOLUTION FOR SEEDS, CROPS, LIVESTOCK AND PROCESSED FOODS**

(71) Applicant: Pür Products, LLC, Berwyn, PA 19312 (US)
(72) Inventor: Grant, Harold D., Berwyn, PA 19312 (US)
(74) Representative: Witzany, Manfred

(57) **Abstract**

An anti-microbial formulation for seed and crop application includes between about 1 ppm and about 100 ppm hypochlorous acid; between about 1 ppm and about 300 ppm alkyl polyglycoside; and a remainder of water. A method of treating seeds and crops with the formulation to restrict or eliminate microbial growth and proliferation is also described herein.

## Description

The present invention relates to an anti-microbial solution for application to seeds, crops, livestock, and processed foods.

Crop production can be negatively impacted by plant diseases. During the growing season and throughout a plant's growth cycle, plants may be attacked by a number of microorganisms, including fungi, fungal-like organisms, bacteria, viruses etc. These diseases can cause significant damage to plants, reducing both the yield and quality of the agricultural commodities.

Plant pathogens are common on seed of virtually all crops. These seedborne pathogens may be internal, infecting plants through flower or fruits, or on the seed surface. External contamination on the surface of seed is common whereby plant pathogens produce a wide range of survival structures (for example spores, oospores, chlamydospores etc.) that stick to the surface of seed or plant during its growth, harvesting, processing and packaging. The infestation or infection of a seed reduces the quantity and quality of the gemination rate of the seed, thus decreasing the number of seedlings that survive. Infected or diseased seeds transfer the pathogens that they carry not only to the soil but to the other plants that are in their proximity, thereby initiating epidemics.

Seeds can be cleaned of plant pathogens by several physical and /or chemical approaches. Hot water treatment can be an effective method to reduce or eliminate some seedborne plant pathogens. However, the temperature and duration of the hot water treatments varies for different crops and it is difficult to standardize the approach so that the seed itself is not damaged. The efficacy and impact on seed germination rates of hot water treatment are questionable. Some fungicide treatments may be effective for certain pathogens but not others. However, the cost of fungicide, labor, and environmental impacts are a major concern. Moreover, synthetic fungicides cannot be used on any organic crop production. Sodium hypochlorite (bleach) may be effective for controlling a wide-spectrum of plant pathogens. However, only a low percentage of bleach (1.2%) may be used use on seed being grown for organic production. But the efficacy and phytotoxicity of even low concentrations of bleach limit the potential use.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

The object of the present invention is to kill or impede the growth of microbes on contact on the surface of seeds, while saving insects like bees.

This is realized by the following anti-microbial formulation. This formulation comprises hypochlorous acid (HClO) between 1ppm and about 100 ppm and alkyl polyglycoside between 1 ppm and about 300 ppm. HClO has a weak disinfecting property. To achieve sufficient disinfection, a concentration of HClO of at least 2000 ppm is needed. On the other hand such a high concentration of HClO would cause a significant smell of chlorine, which is not intended for plants, being intended to be eaten by humans. Additionally such a high HClO concentration could also kill or injure insects and therefore could cause a severe damage to natural environment. Consequently according to the present invention the content of HClO is significantly reduced to a content of 100 ppm maximum. Obviously such a law content will not achieve sufficient disinfection. Therefore the composition additionally comprises 1 ppm to 300 ppm alkyl polyglycoside, having no relevant disinfecting property within this range of concentration. Alcyl polyglycosides are known as components in herbicides containing glyphosate acid and hereby used at very high concentrations. At concentrations up to 300 ppm alcyl polyglycosides do not have any relevant biocide property and are used at a concentration to set pH within the desired window between 5.2 and 7.8. Surprisingly such composition has a huge disinfecting property which cannot be explained nor understood by the properties of its components. Such effect is not achieved by any other component just setting the pH within this range. Therefore it is evident that the alkyl polyglycoside interacts with the HClO. This composition can therefore be used to significantly reduce the amount of hypochlorous acid to allow use at various plants. Water is mainly used as a solvent of mentioned components. This formulation can be used to treat crops from the seed stage through the growth cycle to consumption. The formulation kills or impedes the growth of microbes, including pathogens, germs, viruses, molds, mildews, fungi, and spores on contact on the surface of the seeds. Treating seeds and crops with this formulation will restrict or eliminate microbial growth and proliferation.

The alcyl polyglycosides comprise an alkyl group, which is preferably chosen in the range of 10 to 16 carbon atoms. It comprises octyl, nonyl, decyl, undecyl, dodekyl, tridecyl, tetratecyl, pentatecyl and hexadecyl in branched or branchless form. These alkyls have been found to be suitable for providing significant disinfecting effect for the formulation.

To further enhance the disinfecting effect of the formulation, it is preferred to define the amount of alcyl polyglycosides to achieve a pH between 6.0 and 6.5.

To further increase disinfectant effect of the formulation, the water comprises electrolyzed water. This is produced by electrolyzing of ordinary water and enhances the disinfectant effect in the presence of hypochlorous acid.

In order to overcome problems with chemical instabilities of the formulation, it is recommended to have the formulation separable from a combined state into an alkaline portion and an acidic portion, which is recombinable into the combined state. This facilitates storage and transport of the formulation.

In some applications it is sufficient, to only achieve partial recombination of the alkaline portion with the acidic portion.

Preferably the formulation is applicable to seeds and crops.

It is advantageous to apply the formulation on the service of seeds in order to reduce growth or kill pathogens, germs, viruses, molds, mildews, fungi and spores.

It has been found that the formulation is able to influence replication of microbes and to de-nature microbial DNA. By this way the formulation effectively kills microbes and inhibits reproduction.

The accompanying drawings, which are incorporated herein and constitute part of this specification, illustrate the presently preferred embodiments of the invention, and, together with the general description given above and the detailed description given below, serve to explain the features of the invention.

In the drawings:
- FIG. 1A: is a photo showing a control crop of spinach;
- FIG. 1B: is a photo showing another control crop of spinach;
- FIG. 2A: is a photo showing a test crop of spinach sprayed with a solution of the inventive formula; and
- FIG. 2B: is a photo showing another test crop of spinach sprayed with a solution of the inventive formula.

Certain terminology is used herein for convenience only and is not to be taken as a limitation on the present invention. The terminology includes the words specifically mentioned, derivatives thereof and words of similar import. The embodiments illustrated below are not intended to be exhaustive or to limit the invention to the precise form disclosed. These embodiments are chosen and described to best explain the principle of the invention and its application and practical use and to enable others skilled in the art to best utilize the invention.

Reference herein to "one embodiment" or "an embodiment" means that a particular feature, structure, or characteristic described in connection with the embodiment can be included in at least one embodiment of the invention. The appearances of the phrase "in one embodiment" in various places in the specification are not necessarily all referring to the same embodiment, nor are separate or alternative embodiments necessarily mutually exclusive of other embodiments. The same applies to the term "implementation."

As used in this application, the word "exemplary" is used herein to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Additionally, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

Unless explicitly stated otherwise, each numerical value and range should be interpreted as being approximate as if the word "about" or "approximately" preceded the value of the value or range.

It should be understood that the steps of the exemplary methods set forth herein are not necessarily required to be performed in the order described, and the order of the steps of such methods should be understood to be merely exemplary. Likewise, additional steps may be included in such methods, and certain steps may be omitted or combined, in methods consistent with various embodiments of the present invention.

A formulation in the form of a liquid fungicidal sporicidal antimicrobial solution according to an exemplary embodiment of the present invention can be used as a surface sanitizer, a wash, a treatment for crop seeds to kill or reduce the growth of microbes, including pathogens, germs, viruses, molds, mildews, fungi, and spores on contact on the surface of the seeds, or a treatment in poultry and livestock food. The crops can be vegetables, fruits, herbs, or other naturally growing organism that is harvested for human or animal use or consumption.

The formulation is a safe product which has no known adverse effect on humans or environment. Thus, the formulation can be widely used as a seed treatment on seed for agricultural production, including seed for organic production. The formulation can kill a wide range of microbial plant pathogens. Experimental results indicated that the formulation can be used to surface-sterilize seed, killing spores and oospores of the plant pathogens on the external surface of seed. Spraying the formulation on plants can dramatically reduce the level of pathogens and infection in the field and thus., control or minimize disease. The formulation can be added to irrigation water, and thus may reduce the populations of soilborne pathogens. Washing agricultural products such as vegetables, fruits , livestock, and processed foods with the formulation can reduce the level of common bacteria such as E. coli or Salmonella, commonly associated with food safety concerns.

The formulation kills or reduces the toxicity of pathogens. Additionally, the solution can be used to kill bacteria on a non-organic surface, in the air, and in water. The formulation halts a microbe's ability to replicate by attacking and de-naturing microbial DNA.

Additionally, the formulation can be applied as a spot treatment on crops and/or applied to the soil in which the seeds are planted. Further, the formulation can be applied to the interior surfaces of pipes and other fluid systems that are used to irrigate or otherwise deliver water or other fluids to crops.

In an exemplary embodiment, for seed treatment with the formulation, the formulation can be added at a rate of 1/3 liter of the formulation for every ton of seeds. This ratio can vary, however, due to the type of seed cleaning system that is used, along with local temperature, which can have an effect on drying times. Further, the formulation can be applied in an irrigation system at a ratio of about 0.5% to about 1.5% by weight of the irrigation fluid. The formulation can also be used during the washing/cleaning of cut crops, typically dosed in baths, at a rate of between about 1% and about 3% by weight of the cleaning fluid, depending on the quality of the fluid, such as hard/soft water, amount of particulates in the water, and other factors.

In an exemplary embodiment, the formulation is a solution having a pH of between 5.2 and about 7.8 and has the following formula:
Hypochlorous acid - between about 1 part and about 100 parts
Alkyl polyglycoside - between about 1 part and about 300 parts
Water - remainder
The "parts" can also be considered as "parts per million" (ppm).

The alkyl polyglycoside acts to break down the molecular structure of the solution so that the solution attaches to, rather than merely lays on, a crop leaf, seed, or other surface on which the solution is applied. As a result, larger crop coverage is provided with less solution than if alkyl polyglycoside was not used.

Optionally, in one embodiment, the water can be electrolyzed water. The electrolyzed water (EO) is generated by passing an electrical current through a dilute salt water solution. One byproduct of the reaction is sodium hydroxide (NaOH) and another by product is hypochlorous acid, which as a low pH, contains active chlorine, and has a strong oxidation-reduction potential similar to ozone. The inventor has discovered that using EO water resulted in surface microbial counts 1 log lower than when an iodophor sanitizer was used.

In an alternative embodiment, hypochlorite ion - about 25 parts (or ppm), ozone - about 2.5 parts (or ppm), and/or chlorine dioxide - about 2.5 parts (or ppm), can be added to the formulation.

In order for the formulation to be classified as an "organic" solution, it is desired that there be less than 1.2 % by weight bleach in the formulation. In an exemplary embodiment, the formulation has no (0%) bleach. Ozone can be used instead of bleach because ozone has more cleaning power than bleach. Ozone can act up to 2,000 faster than bleach and is more effective than bleach.

The formulation can be applied throughout any temperature range between freezing and boiling, although an exemplary temperature range matching a particular crop or livestock's growth needs can be used.

The solution can be separated into an acidic portion (containing the hypochlorous acid) and an alkaline portion (containing the alkyl polyglycoside). The solution can be passed through a cell or membrane that separates the acidic portion from the alkaline portion and stores the acidic portion in the first location and stores the alkaline portion in a second location.

To form a final formulation having a desired pH, at least some of the alkaline portion is recombined with the acidic portion at a desired titration level to produce a desired pH. The desired pH is determined prior to recombining the alkaline portion with the acidic portion so that a predetermined amount of the alkaline portion is recombined with the acidic portion. The alkyl polyglycoside in the recombined solution can be varied between about 10 and about 100,000 ppm such that, when the amount of alkyl polyglycoside is closer to 10 ppm, then the solution becomes acidic. When the amount of alkyl polyglycoside is closer to 100,000 ppm, then the solution becomes alkaline.

In an exemplary embodiment, the solution has a pH of between about 6.0 and about 7.0. Those skilled in the art, however, will recognize that the pH of the solution can be adjusted such as, for example, by altering the amount of alkyl polyglycoside so that the pH can be adjusted between about 2.0 and about 12.0. For example, if an acidic solution is required to suit particular seeds and/or soil conditions, the pH can be reduced toward 2.0.

By way of example, the following crops are acid soil crops and prefer a pH of 4 to 5.5:
Blackberry (5.0-6.0)
Blueberry (4.5-5.0)
Cranberry (4.0-5.5)
Parsley (5.0-7.0)
Peanut (5.0-7.5)
Potato (4.5-6.0)
Raspberry (5.5-6.5)
Sweet potato (5.5-6.0)

By way of example, the following crops are somewhat acid soil crops and prefer a somewhat acid soil, having a pH of 5.5 to 6.5:
Apple (5.0-6.5)
Basil (5.5-6.5)
Carrot (5.5-7.0)
Cauliflower (5.5-7.5)
Chervil (6.0-6.7)
Corn (5.5-7.5.)
Cucumber (5.5-7.0)
Dill (5.5-6.5)
Eggplant (5.5-6.5)
Garlic (5.5-7.5)
Melon (5.5-6.5)
Parsley (5.0-7.0)
Pepper (5.5-7.0)
Pumpkin (6.0-6.5)
Radicchio (6.0-6.7)
Radish (6.0-7.0)
Rhubarb (5.5-7.0)
Sorrel (5.5-6.0)
Squash, winter (5.5-7.0)
Sweet potato (5.5-6.0)
Tomato (5.5-7.5)
Turnip (5.5-7.0)

By way of example, the following crops are moderately alkaline soil plants and will tolerate a pH of 6.0 to 7.0 or greater:
Artichoke (6.5-7.5)
Arugula (6.5-7.5)
Asparagus (6.0-8.0)
Bean, pole (6.0-7.5)
Bean, lima (6.0-7.0)
Beet (6.0-7.5)
Broccoli (6.0-7.0)
Broccoli rabe (6.5-7.5)
Brussels sprouts (6.0-7.5)
Cabbage (6.0-7.5)
Cantaloupe (6.0-7.5)
Cauliflower (6.0-7.5)
Celery (6.0-7.0)
Chinese cabbage (6.0-7.5)
Celeriac (6.0-7.0)
Celery (6.0-7.0)
Chinese cabbage (6.0-7.5)
Chive (6.0-7.0)
Cilantro (6.0-6.7)
Claytonia (6.5-7.0)
Collard (6.5-7.5)
Cress (6.0-7.0)
Endive/escarole (6.0-7.0)
Fennel (6.0-6.7)
Gourd (6.5-7.5)
Horseradish (6.0-7.0)
Jerusalem Artichoke/Sunchoke (6.7-7.0)
Kale (6.0-7.5)
Kohlrabi (6.0-7.5)
Leek (6.0-8.0)
Lettuce (6.0-7.0)
Marjoram (6.0-8.0)
Mizuna (6.5-7.0)
Mustard (6.0-7.5)
Okra (6.0-7.5)
Onion (6.0-7.0)
Oregano (6.0-7.0)
Pak choi (6.5-7.0)
Parsnip (5.5-7.5)
Pea (6.0-7.5)
Radicchio (6.0-6.7)
Radish (6.0-7.0)
Rhubarb (6.5-7.0)
Sage (6.0-6.7)
Salsify (6.0-7.5)
Spinach (6.0-7.5)
Squash, summer (6.0-7.0)
Sunflower (6.0-7.5)
Sunflower (6.0-7.5)
Swiss chard (6.0-7.5)
Tarragon (6.0-7.5)
Tomatillo (6.7-7.3)
Watermelon (6.0-7.0)

By way of example, the following crops are very acid to alkaline soil tolerant plants. These crops have the greatest tolerance for a wide range of soil acidity or alkalinity, from about 5.0 to 7.0:
Alpine strawberry (5.0-7.5)
Carrot (5.5-7.0)
Cauliflower (5.5-7.5)
Corn (5.5-7.5)
Cucumber (5.5-7.0)
Dill (5.5-6.7)
Endive/Escarole (5.8-7.0)
Garlic (5.5-7.5)
Parsley (5.0-7.0)
Parsnip (5.5-7.5)
Peanut (5.0-6.5)
Pepper (5.5-7.0)
Rutabaga (5.5-7.0)
Squash, winter (5.5-7.0)
Tomato (5.5-7.5)
Turnip (5.5-7.0)

The formulation can also be used on other edible and non-edible crops, such as livestock, processed foods, tobacco, and marijuana. The formulation can be used to wash various crops at the end of their growth cycle including before and during packaging, thereby eliminating bacteria and pathogens such as E.coli, Salmonella and other dangerous contaminants associated with food safety and consumption.

### Experiment 1 - Applying to growing crops

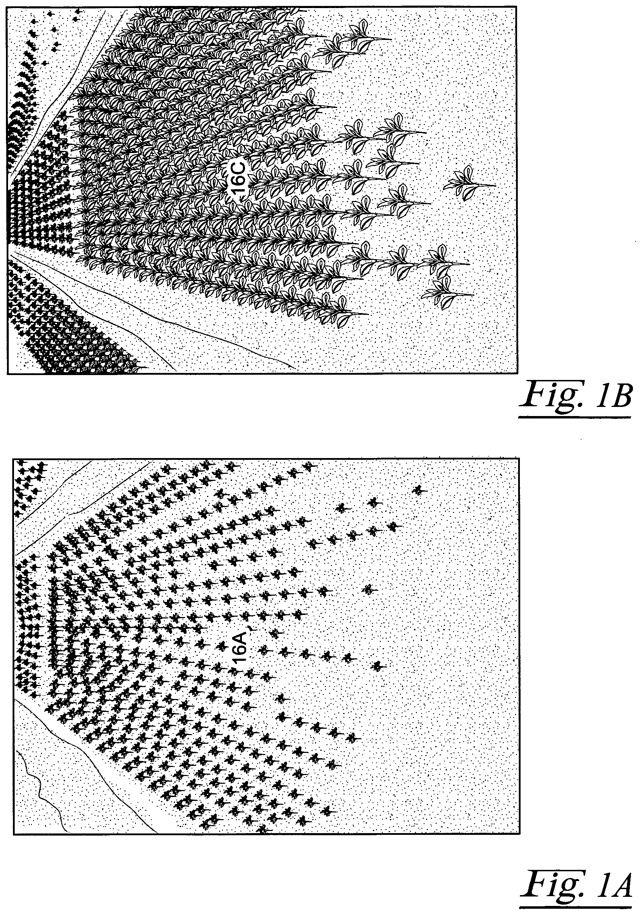

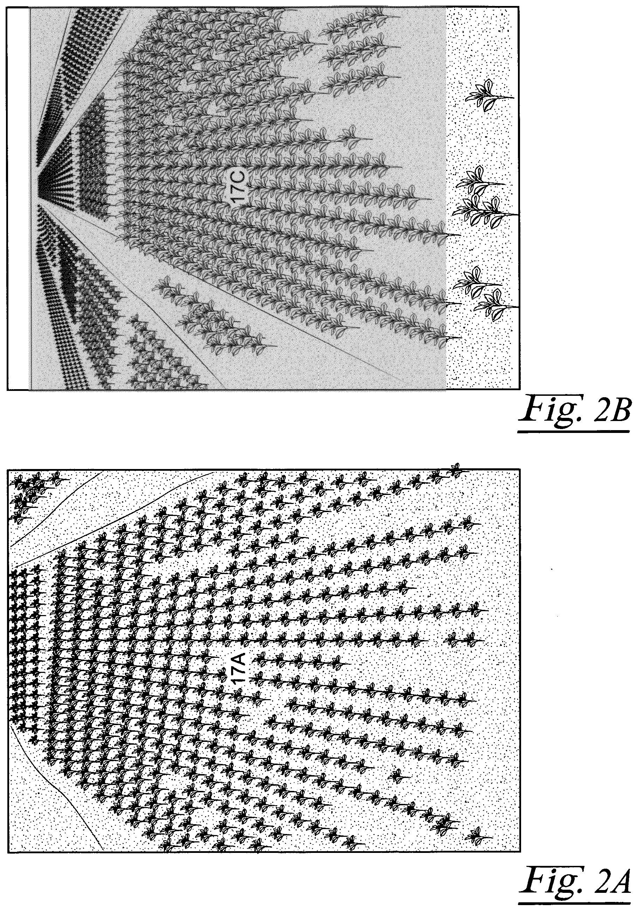

Referring to FIGS. 1A-2B, the inventive formula was applied as a ash to seeds prior to planting and compared to a control group. FIGS. 1A and 1B are the control group spinach plantings, with none of the inventive formula applied to the crop, while FIGS. 2A and 2B are the test group spinach plantings, with a solution of about 10% of the inventive formula and a remainder water applied to the crop.

A comparison of FIGS. 2A-2B with FIGS. 1A-1B shows that the crop of FIG. 2A yields a more vibrant crop than the crop of FIG. 1A and the crop of FIG. 2B yields, on average, larger cleaner, and healthier leaves.

Note that, in the Figures, the notations 16A and 16C indicate control crops and notations 17A and 17C indicate test crops.

It will be further understood that various changes in the details, materials, and arrangements of the parts which have been described and illustrated in order to explain the nature of this invention may be made by those skilled in the art without departing from the scope of the invention as expressed in the following claims.

## Claims

1. An anti-microbial formulation for seed and crop application consisting of:
a formulation consisting of:
between about 1 ppm and about 100 ppm hypochlorous acid;
between about 1 ppm and about 300 ppm alkyl polyglycoside, wherein sufficient amount of alkyl polyglycoside is present such that the formulation has a pH between about 5.2 and about 7.8; and a remainder water.

2. The anti-microbial formulation according to claim 1, wherein the alcyl polyglycoside comprise an alkyl group, which are chosen in the range of 10 to 16 carbon atoms, namely octyl, nonyl, decyl, undecyl, dodekyl, tridecyl, tetratecyl, pentatecyl and hexadecyl in branched or branchless form.

3. The anti-microbial formulation according to claim 1 or 2, wherein sufficient amount of alkyl polyglycoside is present such that the formulation has a pH between about 6.0 and about 6.5.

4. The anti-microbial formulation according to at least one of claims 1 to 3, wherein the water comprises electrolyzed water.

5. The anti-microbial formulation according to at least one of claims 1 to 4, wherein the formulation is separable from a combined state into an alkaline portion and an acidic portion and subsequently recombinable into the combined state.

6. The anti-microbial formulation according to claim 5, wherein at least a portion of the alkaline portion is recombinable with the acidic portion.

7. A method applying the anti-microbial formulation according to at least one of claims 1 to 6, wherein the formulation is applied to seeds and crops.

8. The method according to claim 7, wherein the formulation kills or reduces the growth of pathogens, germs, viruses, molds, mildews, fungi, and spores on contact on the surface of the seeds or the crops.

9. The method according to claim 8, wherein the formulation halts a microbe's ability to replicate by attacking and de-naturing microbial DNA.
